# EUROPEAN PATENT APPLICATION

(11) **EP 1 643 225 A1**
(43) Date of publication of application: **05.04.2006**
(21) Application number: 05020719.0
(22) Date of filing: 22.09.2005
(51) Int. Cl.: G01J 5/00, G01J 5/52

(54) **Emissivity measuring device**

(30) Priority: 30.09.2004 JP 2004286580
(71) Applicant: Ube Industries, Ltd., Ube-Shi, Yamaguchi (JP)
(72) Inventor: Katsuki, Shozo, Ube-shi Yamaguchi (JP); Ohnishi, Akira, Ota-ku Tokyo (JP); Tachikawa, Sumitaka, Atsugi-shi Kanagawa (JP); Nagano, Hosei, Sagamihara-shi Kanagawa (JP); Yamana, Hiroaki, Yokohama-shi Kanagawa (JP)
(74) Representative: Forstmeyer, Dietmar

(57) **Abstract**

The emissivity measuring device 10 of the present invention includes an integrating sphere 18 having an energy entering hole 12 through which radiation energy is made to enter from an infrared ray source 11, a sample hole 14 placed being opposite to an entering direction of radiation energy supplied from the energy entering hole 12 and open edge portions of which are put into contact, in a struck manner, with an object 13 to be tested, and a detecting hole 16 to which a detector 15 to detect radiation energy is attached, wherein the detector 15 detects radiation energy emitted from the object 13 to be tested being multiple-scattered by the integrating sphere 17 via the detecting hole 16 and the detected radiation energy is compared with a measured value of emissivity of a known sample in a calculation controlling means 18 to calculate emissivity of the object 13 to be tested. The temperature sensor is attached to aperture edge portions of the sample hole 14.

## Description

### BACKGROUND OF THE INVENTION

### Field of the Invention

The present invention relates to an emissivity measuring device and more particularly to the emissivity measuring device using an integrating sphere.

### Description of the Related Art

In technological fields including a space development industry, nuclear energy industry, semiconductor industry or the like, in order to carry out heat design for equipment and materials and/or components to be used in the industries, measurement of emissivity is an important factor. For example, in the case of design of a space craft, a heat-control system made up of heat-resistant materials or the like are used and, when such a heat-control system is designed, it is important to analyze a state of an airframe at time of occurrence of aerodynamical heating-up by using physical property data such as emissivity (radiation rate) or the like of materials for components making up the space craft.

Conventional methods for measuring emissivity include a radiation measuring method, reflection measuring method, calorimetry method, or the like. In the radiation measuring method, radiation energy emitted from a surface of a sample to be tested and radiation energy emitted from a black body cavity at the same temperature and wavelength are separately measured and emissivity is calculated from a ratio between these two kinds of energy. In the reflection measuring method, the emissivity is obtained from a ratio between an amount of reflection energy emitted from a surface of a sample to be tested having a specified band of wavelengths and an amount of reflection energy emitted from a surface of a standard sample. In the calorimetry method, on the assumption that a heat loss from a sample to be tested occurs only due to radiation, full hemispheric emissivity is calculated from a heat quantity being lost in half space.

Also, since emissivity has a temperature dependence in particular, technology has been developed in which emissivity of a material to be used in an environment in which a temperature changes severely can be measured under various conditions of temperatures (for example, Japanese Patent Application Laid-open No. 2003 - 194629).

However, the conventional method for measuring emissivity requires a comparatively large-scaled device in any case, thus making it impossible to easily measure emissivity. For example, according to the measurement of emissivity by the calorimetry method, in order to measure emissivity of an object to be tested with high accuracy, measurement with a heater serving as a heat source and/or a temperature sensor being attached to the object to be tested is necessary and this method is effective in measuring emissivity of a specified sample piece prepared in advance. However, when emissivity of, for example, a large object to be tested is to be measured at an arbitrary point or when emissivity is to be measured with components being mounted, for example, in an artificial satellite or various machines being not destroyed, it is difficult to employ this measurement method. Moreover, according to the emissivity measuring method and/or the measuring device described in the above Japanese Patent Application Laid-open No. 2003 - 194629, in order to put an object to be tested under various temperature or pressure conditions and/or in an atmosphere of gas, a heating device, cooling device, pressurizing device, pressure reducing device, gas supplying device, or the like are required, which makes it impossible to achieve simple measurement of emissivity.

On the other hand, as an emissivity measuring device capable of simply measuring emissivity of an object to be tested at room temperatures, for example, a product called "TSS-5X" (manufactured by Japan Sensor Co.,) has been developed. The disclosed measuring device has a hemispherical black body furnace and a detector in a measuring probe, in which, by making the measuring probe be put into contact with an object to be tested, the object to be tested is irradiated with infrared rays emitted from the hemispherical black body heated up to a specified temperature in a concentrated manner and reflection energy supplied from the object to be tested is made to enter the detector from a small hole formed on the top of the hemispherical black body to be detected by the detector and then emissivity is calculated from an expression of a relation between a reflection ratio and an emissivity in the detected reflection energy. According to this emissivity measuring device, not only reflection energy emitted from the object to be tested but also energy entering directly from the black body and radiation energy emitted from the sample to be tested itself enters the detector in a mixed state, thus making it impossible to obtain sufficient measuring accuracy.

### SUMMARY OF THE INVENTION

In view of the above, it is an object of the present invention to provide an emissivity measuring device which is capable of measuring emissivity by a simple operation of only making the measuring device be put in contact with an object to be tested in a struck manner and of effectively detecting only radiation energy emitted from the object to be tested to achieve accurate measurement of emissivity of the object to be tested.

The above object is achieved by the emissivity measuring device including an integrating sphere having an energy entering hole through which radiation energy is made to enter from an infrared ray source, a sample hole placed being opposite to an entering direction of radiation energy supplied from the energy entering hole and open edge portions of which are put into contact, in a struck manner, with an object to be tested, a detecting hole to which a detector used to detect radiation energy is attached, and a calculation controlling unit to be connected to the detector, wherein the detector detects radiation energy emitted from the object to be tested being multiple-scattered by the integrating sphere via the detecting hole and the detected radiation energy is compared with a measured value of emissivity of a known sample in the calculation controlling unit to calculate emissivity of the object to be tested.

It is preferable that the emissivity measuring device has a temperature sensor being attached to aperture edge portions of the sample hole.

It is preferable that the emissivity measuring device has a parallel light irradiating unit being made up of a mirror or a lens to change radiation energy light supplied from the infrared ray source to parallel light between the infrared ray source and the energy entering hole.

It is preferable that the emissivity measuring device has an optical filter between the infrared ray source and the detector and radiation energy divided into radiation energy light having a specified range of wavelengths is detected by the detector.

According to the emissivity measuring device of the present invention, emissivity can be measured by a simple operation of only making the measuring device be put in contact, in a struck manner, with an object to be tested and only radiation energy emitted from the object to be tested can be detected effectively, thus achieving accurate measurement of emissivity of the object to be tested.

### BRIEF DESCRIPTION OF THE DRAWINGS

The above and other objects, advantages, and features of the present invention will be more apparent from the following description taken in conjunction with the accompanying drawings in which:

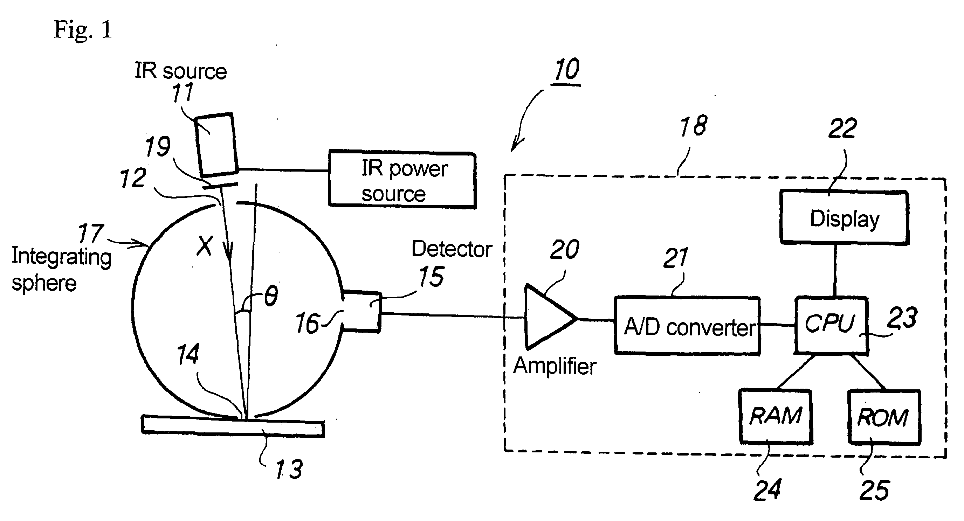

Fig. 1 is a diagram explaining basic configurations of an emissivity measuring device of an embodiment of the present invention.

### DETAILED DESCRIPTION OF THE PREFERRED EMBODIMENTS

Best modes of carrying out the present invention will be described in further detail using various embodiments with reference to the accompanying drawings.

The emissivity measuring device 10 of one preferred embodiment of the present invention shown in Fig. 1 is used to measure the emissivity of objects to be tested 13 including components or the like making up, for example, an artificial satellite, various machines, or the like at room temperatures with their components or the like not being destroyed.

The emissivity measuring device 10 of the embodiment includes an integrating sphere 17 having an energy entering hole 12 through which radiation energy from an infrared ray source 11 is made to enter, a sample hole 14 placed being opposite to an entering direction of radiation energy supplied from the energy entering hole 12 and open edge portions of which are put into contact, in a struck manner, with an object 13 to be tested, and a detecting hole 16 to which a detector 15 used to detect radiation energy is attached and a calculation controlling means 18 to be connected to the detector 15. The detector 15 detects radiation energy emitted from the object 13 to be tested being multiple-scattered by the integrating sphere 17 via the detecting hole 16 and the detected radiation energy is compared with a measured value of emissivity of a known sample in the calculation controlling means 18 to calculate emissivity of the object 13 to be tested.

Also, the emissivity measuring device 10 of the embodiment has a temperature sensor (not shown) for temperature compensation in the edge portions of the sample hole 14 and a parallel light irradiating means 19 made up of a nonaxisymmetric paraboloid mirror or lens to change radiation energy light supplied from the infrared ray source 11 to be parallel light between the infrared ray source 11 and the energy entering hole 12. Moreover, according to the embodiment, the emissivity measuring device 10 has an optical filter (not shown) between the infrared ray source 11 and the detector 15, and thereby the detector 15 detects radiation energy divided into light having a specified range of wavelengths.

According to the embodiment, the integrating sphere 17 is a hollow sphere having, as an internal wall face, a face configured so as to reflect radiation energy having a specified range of wavelengths emitted from the object 13 to be tested in an almost equally-diffusing and wavelength non-selective manner, and preferably has an internal wall face having undergone specular work or being coated with diffusion reflective white paint. Also, the integrating sphere 17 has a thickness of, for example, 1 mm to 20 mm and is a sphere in which its internal wall has a diameter of, for example, 15 mm to 150 mm and has a size which enables an operation of being pressed, by hand, on an object 13 to be tested. In the integrating sphere 17 are formed the energy entering hole 12, sample hole 14, and detecting hole 16 in a manner in which these holes penetrate a surrounding wall and are opened at three places.

The energy entering hole 12 is so configured as to be a circular aperture with a diameter of, for example, 1 mm to 20 mm and, outside the integrating sphere 17, for example, an infrared ray source 11 as a source of infrared rays is placed from which radiation energy having a specified range of wavelengths is applied inside the integrating sphere 17 and toward the sample hole 14 in a manner in which the radiation energy passes through the energy entering hole 12. The parallel light irradiating means 19 being interposed between the energy entering hole 12 and infrared ray source 11 is used to refract radiation energy light fed from the infrared ray source 11 to produce parallel light. By making radiation energy enter the integrating sphere as parallel light and be applied to an object 13 to be tested being in contact with the sample hole 14, only the radiation energy emitted from the object 13 to be tested which is obtained by multiple-scattering in the integrating sphere 17 can be detected effectively by the detector 15 with reflective energy emitted from the object 13 to be tested not entering the detector 15. Moreover, it is preferable that a shutter is mounted between the infrared ray source 11 and energy entering hole 12 and by configuring the shutter so as to be opened at time of measurement, generation of heat in the integrating sphere 17 can be suppressed. Furthermore, as the infrared ray source, a black body furnace being equipped with, for example, a temperature controlling circuit is provided.

The sample hole 14 is so configured as to be a circular aperture having a diameter of, for example, 2 mm to 22 mm and being placed in a position being opposite to a radiation entering direction X relative to the energy entering hole 12 so as to apply radiation energy emitted from the infrared ray source 11 to an object 13 to be tested through the sample hole 14 when the opened aperture portions are made to be in contact, in a struck manner, with a specified portion of the object 13 to be tested in a state in which the opened aperture portions are put into contact, in a pressed manner, with a specified portion of the object 13 to be tested. The temperature sensor made up of a thermo couple, semiconductor device, or the like is attached to the aperture edge portions of the sample hole 14 in its position in which the temperature sensor is able to be in contact with the object 13 to be tested when the aperture edge portion is made to be in contact, in a struck manner, with the object 13 to be tested and the temperature sensor can measure a temperature in a measuring portion of the object 13 to be tested. By measuring a temperature of the object 13 to be tested using the temperature sensor, the emissivity of the object 13 to be tested to be calcuated is proofread, thus making it possible to improve measuring accuracy of the emissivity.

The detection hole 16 is so configured as to be a circular aperture having a diameter of, for example, 0.1 mm to 10 mm and so as to be placed, for example, at a position being about 90 degrees relative to an axis formed by a line connecting the energy entering hole 12 to the sample hole 14 which is a position being able to effectively detect only radiation energy obtained by multiple-scattering in the integrating sphere 17 and fed from the object 13 to be tested without being affected by reflective energy of the radiation energy, which is made to enter the energy entering hole 12 from the infrared ray source 11, applied to the object 13 to be tested in the sample hole 14. Also, to a surrounding wall of the integrating sphere 17 outside the detection hole 16 is attached the detector 15.

The detector 15 has an optical system (not shown) made up of a lens or the like used to introduce radiation energy generated by radiation emitted from an object 13 to be tested being multiple-scattered by the integrating sphere 17 and a detecting element (not shown) arranged on a rear side of the optical system. As the detecting element, a photoelectric-type device to catch radiation energy as light and to output an electric signal corresponding to radiation energy by an electromagnetic effect or a thermal-type device to receive radiation energy as heat and to convert a rise in a temperature of an element into an electric signal is used. As the photoelectric-type device, Si (silicon), Ge (germanium), or the like is used and, as the thermal-type device, a thermopile, a pyroelectric element, or the like is used. In the embodiment, the thermopile being the thermal-type device is preferably used.

In the embodiment, the optical system of the detector 15 contains an optical filter and, therefore, the integrating sphere 17 has the optical filter between the infrared source 11 and the detecting element of the detector 15. The optical filter is so configured as to extract only components having a specified band of wavelengths from radiation energy light gathered by the optical system to divide the radiation energy light, and thereby only the extracted components are supplied to the detecting element. Also, the optical filter may be so configured as to be interposed between the infrared ray source 11 and energy entering hole 12 and as to apply radiation energy light obtained by dividing the radiation energy into light having a specified range of wavelengths to an object 13 to be tested. By mounting the optical filter between the infrared ray source 11 and detector 15, it is made possible to measure emissivity having a specified band of wavelengths effectively.

In the embodiment, the detector 15 is connected through, for example, an amplifier 20, A/D (Analog to Digital) converter 21, or the like, to the calculation controlling means 18 made up of a computer or the like. The calculation controlling means 18 includes, in addition to an image displaying section 22 such as a CRT (Cathode Ray Tube) display or an LCD (Liquid Crystal Display), CPU (Central Processing Unit) 23, RAM (Random Access Memory) 24, ROM (Read Only Memory) 25, or the like, a hard disk, input and output interface, key board (not shown), mouse, or the like. Moreover, in the calculation controlling means 18, computer programs are installed in its embedded hard disk (not shown) and, by execution of computer programs by the CPU, emissivity of an object 13 to be tested can be calculated from radiation energy detected by the detector 15.

To measure radiation energy of an object 13 to be tested by using the emissivity measuring device 10 of the embodiment, prior to measurement of the object 13 to be tested, emissivity and temperature dependence of a sample having high emissivity (for example, Black Kapton: emissivity *ε* in 20°C = 0.80)and another sample having low emissivity (for example, A1 evaporated film: emissivity *ε* in 20°C = 0.05) both being known samples whose emissivity and temperature dependence have been measured by a large-scaled measuring device, as a standard sample for proofreading, are measured by using the emissivity measuring device 10 of the embodiment and, these test results are stored in the hard disk of the calculation controlling means 18 after being proofread.

Next, radiation energy having a specified range of wavelengths fed from the infrared ray source 11 is made to enter the integrating sphere 17 and is applied to components of, for example, an artificial satellite being the object 13 to be tested with the integrating sphere 17 being put into contact, in a pressed manner, with the above components in a state in which the opened surrounding portions are put into contact with the components. Then, only the radiation energy emitted from an object 13 to be tested to which radiation energy light has been applied and multiple-scattered by the integrating sphere is detected by the detector 15 and emissivity of the object 13 to be tested can be easily calculated from the detected radiation energy by comparing the detected radiation energy with a result from measurement of emissivity of the known sample in the calculation controlling means 18 and on the basis of the measured value of the emissivity of the known sample.

Therefore, according to the emissivity measuring device 10 of the embodiment, emissivity of an object 13 to be tested can be measured nondestructively by a simple operation of making the integrating sphere 17 be put in contact, in a struck manner, with the object 13 to be tested and by making it possible to effectively detect only radiation energy, which is multiple-scattered by the integrating sphere 17, emitted from the object 13 to be tested, emissivity of the object 13 to be tested can be measured with accuracy.

It is apparent that the present invention is not limited to the above embodiments but may be changed and modified without departing from the scope and spirit of the invention. For example, any type of the internal wall of the integrating sphere of the present invention may be employed so long as it is spherical and its external surrounding shape may be changed to become a shape that can be easily operated by hand. Moreover, when no measurement with high accuracy is required, the temperature sensor, parallel light irradiating means, optical filter are not always necessary.

### Example

Hereinafter, the embodiment of the present invention is described further by using the example, however, the present invention is not limited to the example.

By using the same emissivity measuring device 10 of the above embodiment having an integrating sphere 17, in which an energy entering hole 12, sample hole 14, and detecting hole 16 are formed, and a spherical diameter of an internal face of which is *φ* 30 mm, as the emissivity of an object 13 to be tested, emissivity of a sample (polyimide film, Upilex - 25R, its emissivity *ε* = 0. 58; HOGS, its emissivity *ε* = 0. 33) having known emissivity is measured and its measuring accuracy is evaluated. Moreover, an infrared ray source (5V, 1.4A) having a reflective mirror is attached to the energy entering hole 12. To the detecting hole 16 is attached a detector 15 using a thermopile (with a function of temperature compensation) having a range of a measuring wavelength being 0.6 *µ*m to 42 *µ*m as a detecting element. Also, by making the integrating sphere 17 be put into contact, in a struck manner, with the object 13 to be tested so that an energy entering direction X toward the sample hole 14 from the energy entering hole 12 is declined, for example, 7 degrees relative to a direction orthogonal to an object 13 to be tested, loss of a regular reflection component of a sample is prevented.

Temperature dependence of each of a sample having high emissivity (for example, Black Kapton: emissivity *ε* in 20°C = 0.80)and another sample having low emissivity (for example, A1 evaporated film: emissivity *ε* in 20°C = 0.05) employed, as a standard sample for proofreading, is measured in advance and, after performing the proofreading, emissivity of a sample having a known emissivity as an object 13 to be tested is measured by the emissivity measuring device 10. In this time point, measuring accuracy is±0. 04.

Proofreading by a temperature of a known sample measured using a temperature sensor attached to aperture surrounding portions of the sample hole 14 is performed, as a result, the measuring accuracy becomes is±0. 01.

Results from the measurement show that, by using the emissivity measuring device of the present invention, emissivity of an object to be tested can be measured with high accuracy.

## Claims

1. An emissivity measuring device comprising:
an integrating sphere having an energy entering hole through which radiation energy is made to enter from an infrared ray source, a sample hole placed being opposite to an entering direction of radiation energy supplied from said energy entering hole and open edge portions of which are put into contact, in a struck manner, with an object to be tested, a detecting hole to which a detector used to detect radiation energy is attached; and
a calculation controlling unit to be connected to said detector;
wherein said detector detects radiation energy emitted from the object to be tested being multiple-scattered by said integrating sphere via said detecting hole and the detected radiation energy is compared with a measured value of emissivity of a known sample in said calculation controlling unit to calculate emissivity of the object to be tested.

2. The emissivity measuring device according to Claim 1, wherein a temperature sensor is attached to aperture edge portions of said sample hole.

3. The emissivity measuring device according to Claim 1, wherein a parallel light irradiating unit is provided which comprises a mirror or lens to change radiation energy light supplied from said infrared ray source to be parallel light between said infrared ray source and said energy entering hole.

4. The emissivity measuring device according to Claim 1, wherein an optical filter is provided between said infrared ray source and said detector and radiation energy divided into radiation energy light having a specified range of wavelengths is detected by said detector.
